# EUROPÄISCHE PATENTSCHRIFT

(11) **EP 4 097 007 B1**
(45) Veröffentlichungstag und Bekanntmachung des Hinweises auf die Patenterteilung: **15.05.2024**
(21) Anmeldenummer: 21701979.3
(22) Anmeldetag: 25.01.2021
(51) Int. Cl.: B64D 11/00

(54) **STAUFACHANORDNUNG FÜR EINE KABINE EINES FAHRZEUGS**
STORAGE COMPARTMENT ASSEMBLY FOR A CABIN OF A VEHICLE
ENSEMBLE COMPARTIMENT DE STOCKAGE POUR LA CABINE D'UN VÉHICULE

(30) Priorität: 31.01.2020 DE 102020102439
(43) Veröffentlichungstag der Anmeldung: 07.12.2022
(73) Patentinhaber: Airbus Operations GmbH, 21129 Hamburg (DE)
(72) Erfinder: GROSS, Claus-Peter, 21129 Hamburg (DE)
(74) Vertreter: LKGLOBAL Lorenz & Kopf Patentanwalt Attorney at Law PartG mbB
(86) Internationale Anmeldenummer: PCT/EP2021/051601
(87) Internationale Veröffentlichungsnummer: WO 2021/151831

(56) Entgegenhaltungen:
- EP-A1- 0 614 806
- DE-A1-102004 043 910
- DE-A1-102009 014 573
- DE-A1-102013 021 108
- US-A1- 2008 078 871
- US-A1- 2018 362 164

## Beschreibung

### TECHNISCHES GEBIET

Die Erfindung betrifft eine Staufachanordnung für eine Kabine eines Fahrzeugs sowie ein Fahrzeug mit einer Passagierkabine sowie mindestens einer derartigen Staufachanordnung.

### HINTERGRUND DER ERFINDUNG

Eine Ausstattung von Passagierkabinen von Flugzeugen wird üblicherweise zur Ausnutzung einer besonders hohen Raumeffizienz und gleichzeitig hohem Komfort gewählt. Abhängig von der mit dem Flugzeug durchzuführenden Reisestrecke kann der Bedarf an Stauraum für Handgepäck variieren. Es zeigt sich allerdings ein Trend des zunehmenden Handgepäcks insbesondere bei Kurzstrecken. Hierfür sind Über-Kopf-Staufächer bekannt, die ein vergrößertes Volumen und eine vergrößerte Staufachöffnung aufweisen, so dass in einzelne Staufächer mehr Gepäck einbringbar ist.

US 2018/0362164 A1 offenbart ein Flugzeug-Staufachsystem mit einem ersten Staufach und einem zweiten Staufach.

DE 10 2004 043910 A1 zeigt ein Haltesystem für ein Gepäckfach mit einer absenkbaren Schale.

US 2008/078871 A1 zeigt ein interaktives Schaltersystem für ein Stauraumsystem für ein Verkehrsflugzeug.

EP 0 614 806 A1 zeigt eine nachrüstbare Blendenanordnung zum Einbau in den Innenraum eines Flugzeugs, wobei das Flugzeug Über-Kopf-Staukästen mit Fächern aufweist.

DE 10 2009 014573 A1 zeigt ein Gepäckfach, welches als Schütte bewegbar oder fixierbar ist, wobei durch ein bewegliches Deckensegment das Gepäckfach im fixierten Zustand ein größeres Volumen aufweist als in einem beweglichen Zustand.

DE 10 2013 021108 A1 zeigt ein Flugzeuggepäcksystem.

### ZUSAMMENFASSUNG DER ERFINDUNG

Das einfache Vergrößern von Staufächern kann dazu führen, dass Gepäck relativ willkürlich in Staufächern untergebracht wird und insbesondere größere Handgepäckstücke ab einer bestimmten Befüllung nicht mehr in die Staufächer passen und daher unter Passagiersitze geschoben werden müssen oder das Umsortieren von Gepäckstücken in dem Staufach erfordern.

Die Aufgabe der Erfindung ist, eine alternative Staufachanordnung vorzuschlagen, die eine größere Staukapazität insbesondere für größere Handgepäckstücke aufweist, dennoch leicht zugänglich ist und auch in kompakteren Kabinen einsetzbar ist.

Die Aufgabe wird gelöst durch eine Staufachanordnung mit den Merkmalen des unabhängigen Anspruchs 1. Vorteilhafte Ausführungsformen und Weiterbildungen sind den Unteransprüchen und der nachfolgenden Beschreibung zu entnehmen.

Es wird eine Staufachanordnung für eine Kabine eines Fahrzeugs vorgeschlagen, aufweisend mindestens ein Staufach mit einem Gehäuse, einer Staufachöffnung, einem in dem Gehäuse gebildeten unteren Fach und einem in dem Gehäuse gebildeten oberen Fach, wobei das untere Fach und das obere Fach direkt übereinander angeordnet sind und durch einen zumindest abschnittsweise in das obere Fach verschwenkbaren Zwischenboden voneinander getrennt sind, wobei an einer unteren Begrenzung des unteren Fachs eine untere horizontale Schwenkkante gebildet ist, auf die Gepäckstücke auflegbar und in das untere Fach einschiebbar sind, wobei angrenzend an einer unteren Begrenzung des oberen Fachs bei nicht verschwenktem Zwischenboden eine obere horizontale Schwenkkante gebildet ist, auf die Gepäckstücke auflegbar und in das obere Fach einschiebbar sind, und wobei das obere Fach eine obere Öffnungskante aufweist, an die sich eine über das oberen Fach erstreckende, zu dem Zwischenboden einen Winkel in einem Bereich von 10° bis 50° aufweisende Hilfsfläche anschließt, die mit zunehmendem Abstand von der oberen Begrenzung einen zunehmenden Abstand zu dem Zwischenboden einschließt.

Das mindestens eine Staufach weist ein Gehäuse auf, welches die äußere Form des Staufachs vorgibt. In dem Gehäuse werden das untere Fach und das obere Fach realisiert. Diese liegen direkt übereinander und kennzeichnen sich durch die weiter nachfolgend dargestellten Merkmale. Es ist vorstellbar, dass zumindest das untere Fach zur Aufnahme von weitgehend standardisierten oder zumindest empfohlenen Gepäckstücken, beispielsweise nach IATA-Empfehlung, ausgebildet sind. Andere Dimensionen auf Basis verbreiteter Abmessungen von Gepäckstücken sind ebenso denkbar.

Die Fächer weisen bei nicht verschwenktem Zwischenboden jeweils eine Fachöffnung auf, die in der Staufachöffnung mündet. Die Fachöffnungen erlauben das Bewegen von Gepäck in die Fächer hinein oder aus ihnen heraus. Es ist sinnvoll, die Staufachöffnung verschließbar zu gestalten, so dass während der Benutzung des Fahrzeugs das in dem Staufach befindliche Gepäck sicher verwahrt verbleibt und nicht versehentlich in die Kabine gerät. Zum bequemen Einbringen oder Entnehmen von Gepäckstücken sind die beiden Fächer bevorzugt vollständig zu öffnen. Dies kann durch die Staufachklappe erfolgen.

Die untere horizontale Schwenkkante könnte als eine Begrenzungskante des unteren Fachs ausgeführt sein. Ein Gepäckstück, beispielsweise ein Kabinentrolley, kann auf sie aufgelegt werden, um anschließend über sie rutschend in das untere Fach geschoben zu werden. Ein Benutzer kann folglich beispielsweise auf einem Gang in der Kabine neben Passagiersitzen stehen, sein Gepäckstück hochheben und auf die untere Schwenkkante legen, um dann durch Nachschieben das Gepäckstück vollständig in das untere Fach zu schieben. Die untere Schwenkkante erleichtert dabei die Handhabung, da bereits beim Beginn des Einbringens des Gepäckstücks ein Teil des Gewichts von dem Staufach aufgenommen wird und der Benutzer weniger Kraft aufwenden muss.

Analog dazu wird für das obere Fach eine obere Schwenkkante bereitgestellt. Diese befindet sich bevorzugt an dem Zwischenboden zwischen den beiden Fächern. Der Zwischenboden ist dabei als ein flacher, bevorzugt ebener Körper zu verstehen, welcher zwischen den beiden Fächern verläuft und eine Unterteilung des mindestens einen Staufachs durchführt. Der Zwischenboden kann in einem nicht verschwenkten Zustand bevorzugt parallel zu einem Kabinenfußboden ausgerichtet sein, wenn sich die Staufachanordnung in einer Kabine befindet, oder sie könnte einen Winkel von bis zu 5° hierzu einschließen. Dies kann ebenso für einen Fachboden des unteren Fachs zutreffen. Die obere Schwenkkante kann direkt in einer durch den Zwischenboden aufgespannten Ebene liegen, allerdings auch etwas darüber, beispielsweise wenige Millimeter bis zu 1 oder 2 cm darüber, um eine Art Rand zu bilden. Ziel ist, mit der oberen Schwenkkante einem Benutzer zu ermöglichen, ein Gepäckstück auf die obere Schwenkkante zu stützen und durch Schieben das Gepäckstück entlang der oberen Schwenkkante das Gepäckstück in das obere Fach zu bringen. Durch den Rand können Gepäckstücke vor dem Herausrutschen gesichert werden. Dies ist insbesondere von Vorteil, wenn ein Fachboden oder der Zwischenboden eine leichte Neigung aufweisen. Weiterhin wird die Steifigkeit des Gehäuses des Staufachs dadurch verbessert. Ein solcher Rand könnte auch an dem Fachboden des unteren Fachs gebildet sein.

Eine Verschwenkbarkeit kann durch ein parallel zu der oberen Schwenkkante verlaufendes Scharnier erreicht werden, das zwei Abschnitte des Zwischenbodens miteinander verbindet. Eine durch das Scharnier gebildete Scharnierlinie kann mittig zwischen der oberen Schwenkkante und einer gegenüberliegenden hinteren Begrenzung des Zwischenbodens angeordnet sein. Allerdings könnte sie auch weiter in Richtung der hinteren Begrenzung angeordnet sein, so dass ein substantieller Teil des Zwischenbodens nach oben verschwenkbar ist. Durch das Verschwenken wird das Befüllen des unteren Fachs erleichtert und die Abmessungen des unteren Fachs können minimiert werden, da kein erhöhter Raumbedarf für das Schwenken und Kippen von Gepäckstücken notwendig ist.

Dabei ist denkbar, dass bei der Nutzung des Fahrzeugs die Fächer bevorzugt nacheinander befüllt werden. Es könnte sich anbieten, zuerst das untere Fach mit hochgeschwenktem Zwischenboden mit Gepäckstücken zu befüllen. Ist nicht der gesamte Zwischenboden nach oben verschwenkbar, sondern nur ein an der oberen Schwenkkante endender Abschnitt verbleibt stets ein hinterer Abschnitt des Zwischenbodens starr in dem Staufach angeordnet. Ein Benutzer kann ein in das untere Fach einzubringendes Gepäckstück folglich unter den starren Abschnitt des Zwischenbodens einschieben. Damit wird eine mögliche Ausrichtung des Gepäckstücks vorgegeben, sodass das untere Fach sinnvoll und effizient mit mehreren Gepäckstücken befüllt wird.

Durch diese Ausgestaltung kann eine besonders raumsparende Anordnung von Staufächern mit gleichzeitig hoher Gepäckkapazität realisiert werden, welche auch in Verkehrsmitteln mit geringeren Rumpfabmessungen integrierbar sind. Die Kabine des Fahrzeugs kann folglich höhere Kapazitäten zur Aufnahme von Handgepäck aufweisen. Damit kann jedoch in dem oberen Fach eine möglicherweise höher gelegene Zugriffsöffnung für Gepäckstücke resultieren. Ein Benutzer müsste dann ein Gepäckstück möglicherweise etwas höher heben, um es in das obere Fach zu bringen. Die obere Schwenkkante kann jedoch dabei über einen wesentlichen Abschnitt des Vorgangs des Einbringens des Gepäckstücks unterstützend wirken und den Kraftbedarf des Benutzers reduzieren.

Um einfacher und gezielter das Gepäckstück in das obere Fach einschieben zu können, ist die vorangehend genannte Hilfsfläche vorgesehen. Diese befindet sich in vertikaler Richtung oberhalb des oberen Fachs und schließt mit dem Zwischenboden den vorangehend genannten Winkel ein. Sobald es wenige Zentimeter in das obere Fach ragt und auf der oberen Schwenkkante aufliegt, befindet sich eine obere Oberfläche des Gepäckstücks zwischen der oberen Schwenkkante und der Hilfsfläche in einem Flächenkontakt mit der Hilfsfläche. Dabei liegt der Schwerpunkt des Gepäckstücks außerhalb des oberen Fachs. Durch die Lage des Schwerpunkts wirkt auf das Gepäckstück ein Drehmoment um die obere Schwenkkante herum in Richtung der Hilfsfläche, sodass folglich die obere Oberfläche des Gepäckstücks durch das Eigengewicht des Gepäckstücks auf die Hilfsfläche gedrückt wird. Folglich unterstützt die Hilfsfläche die Aufnahme des Gewichts und fungiert gleichzeitig als Führung der oberen Oberfläche zum Einschieben des Gepäckstücks in das oberen Fach.

Die Führung kann dahingehend optimiert werden, dass ein Abstand zwischen der oberen Schwenkkante und der Hilfsfläche auf bevorzugte Gepäckstücke, beispielsweise Kabinentrolleys, angepasst ist. Der zwischen dem Zwischenboden und der Hilfsfläche eingeschlossene Winkel ist weiter bevorzugt derart gewählt, dass ein durchschnittlicher Benutzer, der das Gepäckstück auf die obere Schwenkkante liegt, das Gepäckstück anschließend mit einem solchen Winkel zu dem Kabinenfußboden hält, dass der zwischen der oberen Schwenkkante und der Hilfsfläche eingeschlossene Raum das Einschieben des Gepäckstücks ermöglicht. Der Winkel kann etwa 10° bis 50°, bevorzugt 10° bis 30° und besonders bevorzugt 15° bis 25° betragen. Die genaue Auswahl des Winkels kann von dem Abstand der oberen horizontalen Schwenkkante zu dem Fußboden und/oder zu dem Gang abhängig sein.

Insgesamt wird durch die erfindungsgemäße Staufachanordnung eine besonders vorteilhafte Kombination übereinanderliegender Fächer in platzsparender Weise erlaubt, ohne das Komfortempfinden in der Kabine einzuschränken.

Es ist besonders bevorzugt, wenn die Staufachöffnung durch eine Staufachklappe verschließbar sind. Für das Verschwenken des Zwischenbodens ist es sinnvoll, das gesamte Staufach öffnen zu können. Die Staufachklappe könnte dabei oberhalb des oberen Fachs schwenkbar angeordnet sein und durch Aufschwenken nach oben geöffnet werden. Ein an einem Klappenscharnier gelegener Bereich der oberen Staufachklappe kann gebogen sein, um einen harmonischen Abschluss des Staufachs im Deckenbereich der Kabine zu realisieren. Die Staufachklappe kann einteilig sein.

In einer vorteilhaften Ausführungsform ist mindestens die Hälfte und bevorzugt mindestens zwei Drittel der Tiefe des Zwischenbodens verschwenkbar. Der einem Benutzer dadurch bereitgestellte Raum ist dadurch ausreichend groß, um ein Gepäckstück bequem in das untere Fach einbringen zu können. Ein verbleibender Abschnitt des Zwischenbodens ist bevorzugt starr angeordnet und kann das Gepäckstück sinnvoll in eine Endlage führen.

Das untere Fach und das obere Fach schließen im Bereich der Staufachöffnung horizontal bündig ab. Der fehlende horizontale Versatz führt dazu, dass das obere Fach eine geringere Tiefenerstreckung zur Aufnahme von Gepäckstücken aufweist. Dadurch könnte sich anbieten, entweder eine geringere Anzahl von Gepäckstücken in dem oberen Fach aufzunehmen, die jedoch anders, d.h. insbesondere längs zur Gangrichtung, ausgerichtet sind, als in dem unteren Fach, oder lediglich kleinere Handgepäckstücke zu erlauben. Das Staufach befindet sich insbesondere in einem Bereich eines Rumpfquerschnitts, der sich prägnant in horizontaler Richtung erstreckt. Dies kann etwa ein oberer Teil des Rumpfquerschnitts sein, der direkt unterhalb des Deckenbereichs (die sogenannte "Crown Area" eines Rumpfquerschnitts) liegt.

Es ist vorteilhaft, wenn der Zwischenboden ein erstes schwenkbares Segment und ein zweites schwenkbares Segment aufweist, wobei das erste schwenkbare Segment an dem zweiten schwenkbaren Segment angeordnet ist und wobei Schwenkachsen beider Segmente parallel zueinander sind. Das erste Segment könnte die obere Schwenkkante aufweisen und ist unabhängig verschwenkbar. Es könnte sich anbieten, das erste Segment so anzuordnen, dass es um im Wesentlichen 180° zu dem zweiten Segment verschwenkbar ist und dadurch auf eine Oberseite des zweiten Segments aufgelegt werden kann. Das zweite Segment ist unabhängig davon verschwenkbar. Liegt das erste Segment auf dem zweiten Segment auf, kann das Paket aus den beiden Segmenten zu einer Oberseite des oberen Fachs bewegt werden.

In einer besonders vorteilhaften Ausführungsform ist das untere Fach dazu ausgebildet, mehrere Handgepäckstücke mit IATA-Standard-Maximalabmessungen nebeneinander aufzunehmen. Die Handgepäckstücke können etwa ein Maß von 55 × 40 × 20 cm aufweisen. Unter Berücksichtigung von Rollen, Handgriffen und ähnlichem kann ein Maß von etwa 56 × 40 × 25 cm angenommen werden, wobei letzteres Maß auch noch etwas überschritten werden könnte. Es könnten sich etwa umhüllende Maße von 610 mm × 406 mm × 254 mm oder leicht abweichende Maße anbieten. Bei der Ausgestaltung des unteren Fachs auf einer solchen Basis können folglich 90 % oder mehr der gängigen Handgepäckstücke aufgenommen werden. Das untere Fach kann durch enge Anpassung an diese Maße einen Benutzer intuitiv dazu bringen, Gepäckstücke in gleicher Ausrichtung nebeneinander anzuordnen, sodass eine größtmögliche Menge von Handgepäckstücken dort aufgenommen werden kann.

Bevorzugt weist das untere Fach einen Boden auf, der zu dem nicht verschwenkten Zwischenboden einen Abstand von höchstens 35 cm und bevorzugt von höchstens 30 cm aufweist. Durch die Begrenzung der Höhe des unteren Fachs kann ein Benutzer das Handgepäckstück lediglich in einer dafür vorgesehenen Ausrichtung einschieben. Eine hintere Begrenzung des Zwischenbodens dient dabei als eine Begrenzung, sodass beispielsweise das hochkante Einschieben des Gepäckstücks verhindert wird. Ein Abstand von bis zu 35 cm bzw. bevorzugt von bis zu 30 cm erlaubt das Einschieben eines Handgepäckstücks mit einer Dicke von beispielsweise bis zu 25 oder 26 cm und könnte sogar das Ablegen einer Jacke oder dergleichen darauf ermöglichen.

Eine durch die Hilfsfläche aufgespannte Hilfsebene weist einen Abstand in einem Bereich von 20 bis 45 cm und bevorzugt von 25 bis 35 cm zu der oberen Schwenkkante auf. Der Abstand der Hilfsebene könnte dann auf eine vorangehend genannte, empfohlene Handgepäckstückdicke angepasst sein und erlaubt das problemlose Einschieben des Handgepäckstücks in das obere Fach. Gleichzeitig wird jedoch auch das vorangehend erläuterte Unterstützen des Gepäckstücks durch die Hilfsfläche begünstigt.

Eine vorteilhafte Ausführungsform weist ferner eine Gasfeder auf, die schwenkbar mit dem Gehäuse und dem Zwischenboden gekoppelt ist, um den Zwischenboden in einer aufgeschwenkten Position zu halten. Ein Benutzer oder ein Flugbegleiter kann vor dem Befüllen des unteren Fachs den Zwischenboden mit einem Arm hochklappen und er kann in dieser Position verbleiben. Damit wird gleichzeitig verhindert, dass das obere Fach mit Gepäckstücken befüllt wird, die dort nicht hineinpassen.

Weiterhin kann die Staufachklappe eine Anzeigeeinheit aufweisen. Die Anzeigeeinheit kann insbesondere eine Anzeige auf LED- oder OLED-Basis aufweisen. Bevorzugt ist die Anzeigeeinheit an einem unteren Abschnitt der Staufachklappe angeordnet, der bevorzugt flach ist. Die Anzeigeeinheit kann neben verschiedenen Informationen auch Bewegtbilder von Außenkameras oder Werbeinformationen darstellen. Die Anzeigeeinheit kann sich auf einem Großteil oder allen Staufachklappen erstrecken.

Besonders bevorzugt weist die Staufachanordnung ferner mindestens eine Passagier-Service-Einheit oder einen Servicekanal an einer Unterseite des Gehäuses auf. Damit eignet sich die Staufachanordnung zur direkten Anordnung oberhalb von Passagiersitzen. Ein Servicekanal könnte mehrere Passagierserviceeinheiten aufnehmen und beispielsweise verschiebbar oder zumindest an einer einstellbaren Position befestigbar aufnehmen. Die Passagierserviceeinheiten bieten dann insbesondere die üblichen Funktionen wie Leselicht, Luftdüse, das Bereitstellen einer Anzeigeeinheit sowie von Sauerstoffmasken.

Es ist vorteilhaft, wenn die Passagier-Service-Einheit oder der Servicekanal stufenlos und kontinuierlich gekrümmt in eine Form des Gehäuses übergeht. Damit kann nicht nur die optische Form ansprechend gestaltet, sondern auch mögliche Stoßkanten verhindert werden. Ist die Staufachanordnung mit ihrem unteren Ende etwas tiefer gelegen als bei üblichen, kleineren Staufächern, ist dies besonders vorteilhaft.

Die Erfindung betrifft ferner ein Fahrzeug mit einer Kabine, einem Fußboden, auf dem Fußboden befindlichen Passagiersitzen sowie mindestens einer oberhalb der Passagiersitze angeordneten Staufachanordnung gemäß den vorangehenden Ausführungen. Es kann sich dabei um eine Kabine mit einem Mittelgang handeln, der zwei Passagiersitzabschnitte mit jeweils drei nebeneinander liegenden Passagiersitzen voneinander trennt. Alternativ dazu kann die Kabine auch zwei voneinander beabstandete und parallel zueinander verlaufende Gänge aufweisen, die drei Passagiersitzabschnitte voneinander trennen. Diese könnten dann insbesondere zwei laterale, außenliegende Passagiersitzabschnitte und einen mittleren Passagiersitzabschnitt aufweisen. Über außenliegenden und/oder über einem mittleren Passagiersitzabschnitt könnte eine Staufachanordnung vorgesehen sein.

Es ist bevorzugt, wenn die untere horizontale Schwenkkante einen vertikalen Abstand in einem Bereich von 150-170 cm von dem Fußboden aufweist. Damit können etwa Passagierkabinen mit der erfindungsgemäßen Staufachanordnung bestückt werden, die in einem Fahrzeug, insbesondere einem Flugzeug, mit einem Rumpfdurchmesser von höchstens 6 m, bevorzugt von höchstens 5 m und besonders bevorzugt von höchstens 4 m aufweist. Der vertikale Abstand erlaubt das leichte Einbringen von Gepäckstücken in das untere Fach und schränkt das Komfortempfinden von Passagieren direkt unterhalb der Staufachanordnung nicht ein.

Es kann außerdem vorteilhaft sein, wenn die obere horizontale Schwenkkante einen vertikalen Abstand in einem Bereich von 175-195 cm aufweist. Gepäckstücke können dadurch auch relativ einfach in das obere Fach eingebracht werden. Schließlich kann die Hilfsfläche zu dem Zwischenboden einen Winkel in einem Bereich von 15° bis 25° einschließen. Die Hilfsfläche könnte insbesondere bei den vorangehend genannten vertikalen Abständen das Gepäckstück für das obere Fach stützen.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren.

In den Figuren stehen weiterhin gleiche Bezugszeichen für gleiche oder ähnliche Objekte.
Fig. 1 zeigt eine Kabine mit einer Staufachanordnung oberhalb von Passagiersitzen in einer teilweisen Querschnittsansicht.
Fig. 2a und 2b zeigen eine dreidimensionale Ansicht eines geöffneten Staufachs.
Fig. 3a, 3b, 4, 5 und 6 zeigen den Ablauf des Einbringens von Gepäckstücken.
Fig. 7 zeigt ein Flugzeug.

### DETAILLIERTE DARSTELLUNG EXEMPLARISCHER AUSFÜHRUNGSFORMEN

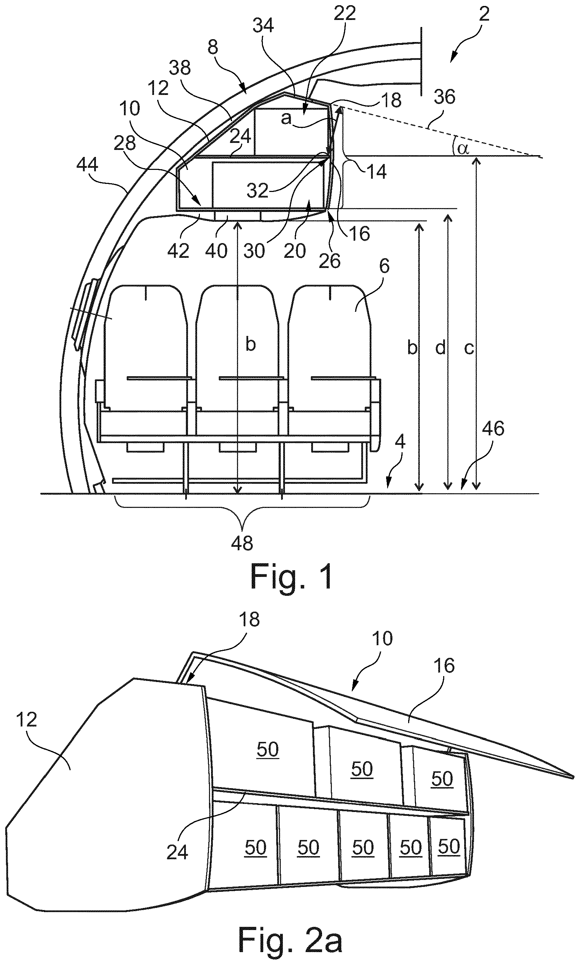

Fig. 1 zeigt eine Passagierkabine 2 eines Verkehrsflugzeugs mit einem Fußboden 4, darauf befindlichen Passagiersitzen 6 und einer darüber positionierten Staufachanordnung 8. Die Staufachanordnung 8 weist mindestens ein Staufach 10 auf, das ein Gehäuse 12 besitzt. Es könnte sich beispielsweise über eine Länge von vier Spantfeldern des Flugzeugs erstrecken. Dies könnte beispielsweise drei Sitzreihen mit engerem Sitzabstand entsprechen. Das Gehäuse 12 könnte das Staufach 10 vollständig umgeben oder zumindest rückwärtig zumindest offen sein. Das Staufach 10 weist eine Staufachöffnung 14 auf, die durch eine Staufachklappe 16 verschließbar ist. In dem Staufach 10 sind weiterhin ein unteres Fach 20 und ein oberes Fach 22 gebildet. Die beiden Fächer 20 und 22 liegen direkt übereinander und werden durch einen Zwischenboden 24 voneinander getrennt. Er verläuft in dieser Darstellung insbesondere parallel zu dem Fußboden 4, so dass die obere Begrenzung des unteren Fachs 20 und die untere Begrenzung des oberen Fachs 20 parallel zu dem Fußboden 4 verlaufen. Die Staufachöffnung 14 erstreckt sich über die gesamte Bauhöhe beider Fächer 20 und 22 zusammen, so dass Gepäckstücke frei in die Fächer 20 und 22 einbringbar sind.

Zum Unterstützen des Einlegens eines Gepäckstücks in das untere Fach 20 ist eine untere horizontale Schwenkkante 26 vorgesehen. Diese schließt exemplarisch mit einer unteren Vorderkante des unteren Fachs 20 ab. Ein Benutzer kann ein Gepäckstück auf die untere Schwenkkante 26 auflegen, um das Gepäckstück dann an der unteren Schwenkkante 26 entlang in das unteren Fach 20 zu schieben. Über den Schiebeweg wird das Gepäckstück stets von der unteren Schwenkkante 26 gestützt. Der Zwischenboden 24 erzwingt in dieser Darstellung das Nachführen einer räumlichen Orientierung des Gepäckstücks und kann durch die begrenzte Höhe des unteren Fachs 20 ein nur teilweise eingeschobenes Gepäckstück stützen.

Das untere Fach 20 weist einen Fachboden 28 auf, auf dem das Gepäckstück nach dem Einschieben ruht. Das untere Fach 20 ist beispielhaft so dimensioniert, dass eine Reihe von Gepäckstücken mit Abmessungen nach IATA-Empfehlungen aufnehmbar sind. Diese weisen etwa eine Länge von etwa 55 cm, eine Breite von etwa 40 cm und eine Dicke von etwa 20 - 25 cm auf. In dem gezeigten Beispiel lässt sich das Gepäckstück flach und in Längsrichtung einschieben, d.h. mit einem Boden eines liegenden Gepäckstücks zuerst. Die in der Zeichnungsebene der Fig. 1 ersichtliche Tiefe des unteren Fachs 20 beträgt an einer Oberseite des unteren Fachs 20 daher etwas mehr als 55 cm. Dies ist in einer Höhe von beispielsweise 5 cm mehr als der Dicke des Gepäckstücks, d.h. etwa 25-30 cm oberhalb des Fachbodens 28 gemessen.

Das obere Fach 22 weist allerdings beispielhaft eine deutlich geringere Tiefe in einer Höhe von 25-30 cm oberhalb des horizontalen Zwischenbodens 24 auf. Diese könnte etwa lediglich etwas mehr als 40 cm betragen, sodass ebenso ein Handgepäckstück mit empfohlenen Abmessungen einbringbar ist, jedoch in einer um 90° verdrehten Ausrichtung und parallel zu der Längserstreckung der Kabine. Damit reduziert sich die Anzahl der Gepäckstücke, die durch das obere Fach 22 aufnehmbar sind, im Vergleich zum unteren Fach 20. Zum Vereinfachen des Einschiebens ist eine obere horizontale Schwenkkante 30 vorgesehen, die an einer in die Kabine ragenden Vorderkante 32 des Zwischenbodens 24 angeordnet oder als diese ausgeführt ist. Ein Benutzer kann ein Gepäckstück auf die obere horizontale Schwenkkante 30 auflegen und es entlang der oberen horizontalen Schwenkkante 30 in das obere Fach 22 schieben.

Eine Besonderheit liegt in einer Hilfsfläche 34, die sich von einer oberen Öffnungskante 18 über das obere Fach 22 erstreckt und zu dem horizontal angeordneten Zwischenboden 24 einen Winkel α in einem Bereich von 10° bis 50° einschließt. Die Hilfsfläche 34 schließt weiterhin mit zunehmendem horizontalen Abstand von der oberen Begrenzung des oberen Fachs 22 in das Staufachinnere einen zunehmenden Abstand zu dem Zwischenboden 24 ein. Der Abstand a der Hilfsfläche 34 zu der oberen Schwenkkante 30, vertikal zu einer Hilfsebene 36 im Bereich einer oberen Kante 18 der Staufachöffnung 14 gemessen, könnte im Wesentlichen der Höhe des unteren Fachs 20 entsprechen. Ein Gepäckstück, das von einem Benutzer zwischen der oberen horizontalen Schwenkkante 30 und der Hilfsfläche 34 in das obere Fach 22 eingesetzt wird, liegt folglich auf der oberen Schwenkkante 30 auf, wobei dessen Oberseite schwerkraftbedingt an die Hilfsfläche 34 gedrückt wird. Die Anordnung unterstützt den Benutzer folglich, beim Umsetzen der Hände das Gepäckstück festzuhalten, sodass die Handhabung deutlich erleichtert wird.

Rückwärtig schließt sich eine Rückwand 38 an, welche von der Hilfsfläche 34 an dem Zwischenboden 24 vorbei zu einem lateral außenliegenden Ende des Fachbodens 28 verläuft. Unterhalb des Fachbodens 28 schließt sich eine Passagierserviceeinheit 40 an, die von einer Verkleidung 42 umgeben ist, welche eine kontinuierliche Krümmung aufweist.

Exemplarisch ist die Kabine 2 in einem Flugzeugrumpf 44 gebildet, der einen Durchmesser von etwa 4 m aufweist. Der Fußboden 4 liegt etwas unterhalb eines Mittelpunkts des Rumpfquerschnitts. Beispielhaft kann der lichte Abstand b zwischen der PSU 40 und dem Fußboden 4 ungefähr 150 cm betragen. Die untere Schwenkkante 26 könnte sich in einem Abstand d von 150 bis 170 cm über dem Fußboden 4 befinden und in dem gezeigten Beispiel etwa 155 cm. Die obere Schwenkkante 30 könnte in einem Abstand c von etwa 185 cm über dem Fußboden 4 angeordnet sein.

Aufgrund der signifikanten Krümmung des Rumpfs 44 rückseitig des Staufachs 10 ist die Tiefe des oberen Fachs 22 bei horizontal bündig angeordneten Kanten 26, 30 und 18 unterschiedlich. Dennoch können größere Gepäckstücke in unterschiedlichen Ausrichtungen aufgenommen werden.

An dieser Stelle sei darauf hingewiesen, dass die Kabine 2 einen Mittelgang 46 aufweist, an den sich beidseitig jeweils Passagiersitzabschnitte 48 anschließen, die mit Sitzreihen zu jeweils drei Passagiersitzen 6 bestückt sind. Beidseitig des Mittelgangs 46 können sich oberhalb der Passagiersitze 6 jeweils Staufächer 10 befinden, welche sich in Längsrichtung der Kabine aneinanderreihen. Der Raum oberhalb des Mittelgangs 46 bleibt in diesem Beispiel frei. Wie weiter nachfolgend erläutert wird, ist der Zwischenboden 24 falt- bzw. schwenkbar ausgeführt.

Erstreckt sich das Staufach 10 beispielsweise über drei Spantfelder, kann es in dem unteren Fach fünf Gepäckstücke 50 mit den vorangehend genannten Maßen und quer zum Gang 46 ausgerichtet aufnehmen, in dem oberen Fach 22 drei längs zum Gang 46 ausgerichtete Gepäckstücke 50, so dass das Staufach 10 eine Aufnahmekapazität für acht derartige Gepäckstücke aufweist.

Fig. 2a zeigt den Aufbau aus einer etwas geänderten Perspektive, wobei die Staufachklappe 16 geöffnet ist. Hier ist ersichtlich, dass Gepäckstücke 50 in den Fächern 20 und 22 angeordnet sind, wobei die in dem oberen Fach 22 liegenden Gepäckstücke 50 auf dem horizontalen Zwischenboden 24 aufliegen und bis zu der oberen Schwenkkante 30 ragen und parallel zu dem Gang 46 angeordnet sind. Die Gepäckstücke 50 in dem unteren Fach 20 liegen indes quer zu dem Mittelgang 46.

Die Staufachklappe 16 kann einen hier nicht näher gezeigten Beschlag aufweisen, mit dem sie in geschlossenem Zustand verriegelbar ist.

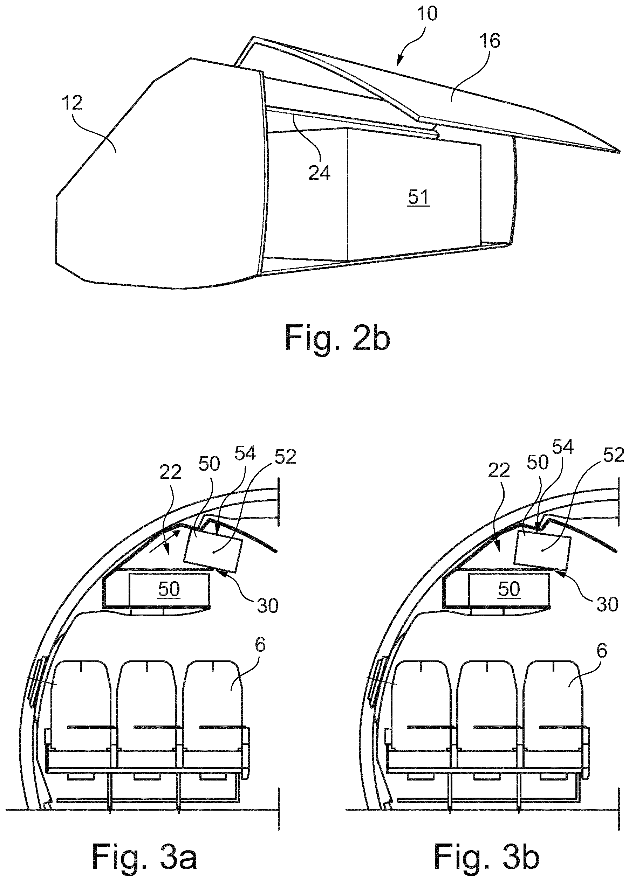

Fig. 2b zeigt das Staufach 10 in einem anderen Zustand. Hier ist der Zwischenboden 24 nach oben geschwenkt und erlaubt, ein deutlich größeres Gepäckstück 51 in das dann vergrößerte Fach einzubringen. Die Ausführung des Zwischenbodens 24 wird weiter nachfolgend gezeigt.

In Fig. 3a und 3b wird der Vorgang des Einlegen eines Gepäckstücks 50 in das obere Fach 22 gezeigt. Hierzu wird der Schwerpunkt 52 des Gepäckstücks 50 dargestellt. In Fig. 3a befindet sich der Schwerpunkt 52 in horizontaler Richtung außerhalb des horizontalen Zwischenbodens 24, sodass das Gepäckstück 50, welches parallel zu dem Gang 46 angeordnet ist, schwerkraftbedingt ein Moment um die obere Schwenkkante 30 erfährt. Hierdurch wird eine Oberseite 54 des Gepäckstücks 50 an die Hilfsfläche 34 gedrückt. Das Gepäckstück 50 wird dadurch zwischen der oberen Schwenkkante 30 und der Hilfsfläche 34 gehalten und geführt. Durch ein Nachschieben des Gepäckstücks 50 in Richtung des oberen Staufachs 22 gelangt der Schwerpunkt 52 über die obere Schwenkkante 30 und weiter in das obere Fach 22 hinein, sodass das Gepäckstück 52 eine Schwenkbewegung in Richtung des Zwischenbodens 24 durchführt. Durch ein Weiterschieben gerät das Gepäckstück 50 rutschend auf dem Zwischenboden 24 in Richtung der Rückwand 38.

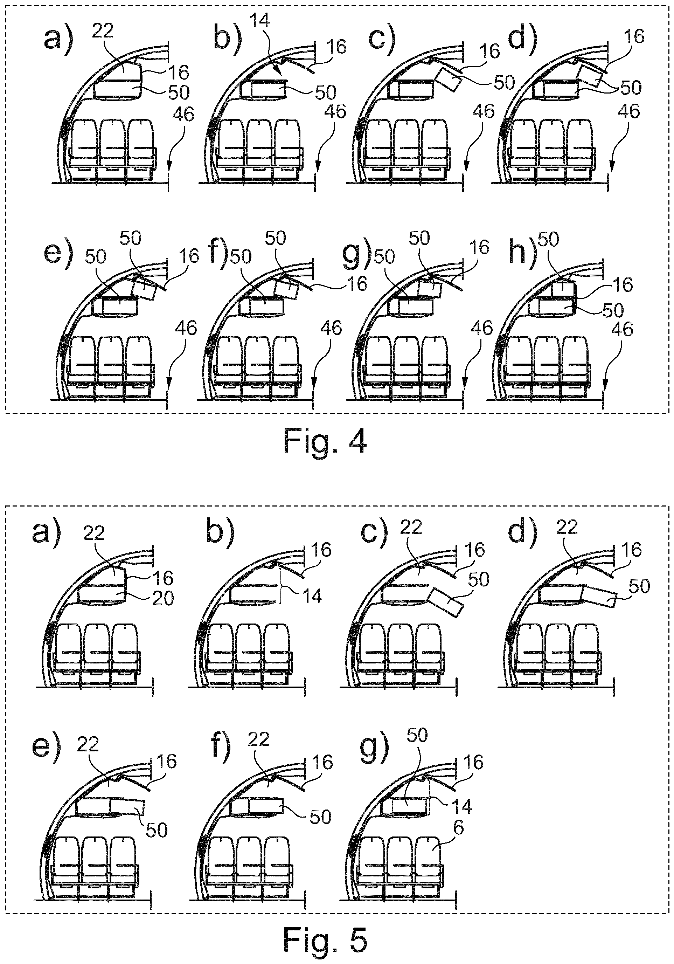

In Fig. 4 wird in mehreren Teildarstellungen a), b), c), d), e), f), g) und h) der Vorgang des Einschiebens des Gepäckstücks 50 in das obere Fach 22 etwas ausführlicher gezeigt. In a) ist das obere Fach 22 leer und geschlossen. In b) ist die Staufachklappe 16 aufgeschwenkt. In c) ist das Gepäckstück 50 in einer Ausrichtung parallel zu dem Gang 46 auf die obere Schwenkkante 30 gelegt. In d) wird das Gepäckstück 50 in Richtung der Hilfsfläche 34 geschoben, die es in e) erreicht. Wie in f) ersichtlich, wird das Gepäckstück 50 an der Hilfsfläche 34 entlang geführt, bis in g) die in Figur 3b gezeigte Ausrichtung erreicht wird. Nach dem Einschieben des Gepäckstücks 50 wird die Staufachklappe 16 geschlossen, wie in h) dargestellt.

Fig. 5 zeigt in sieben Teildarstellungen a), b), c), d), e), f) und g) das Einschieben eines Gepäckstücks 50 in das untere Fach 20. In a) ist die Staufachklappe 16 geschlossen und in b) geöffnet. Bei c) ist das Gepäckstück 50 an die untere Schwenckante 26 angelegt. In d) ragt das Gepäckstück 50 schon etwas in das untere Fach 20 und wird aufgrund der begrenzten Höhe zwischen dem Boden 28 und dem Zwischenboden 24 gehalten und geführt. In f) und g) wird das Gepäckstück 50 weitergeschoben, bis es in g) vollständig eingeschoben ist.

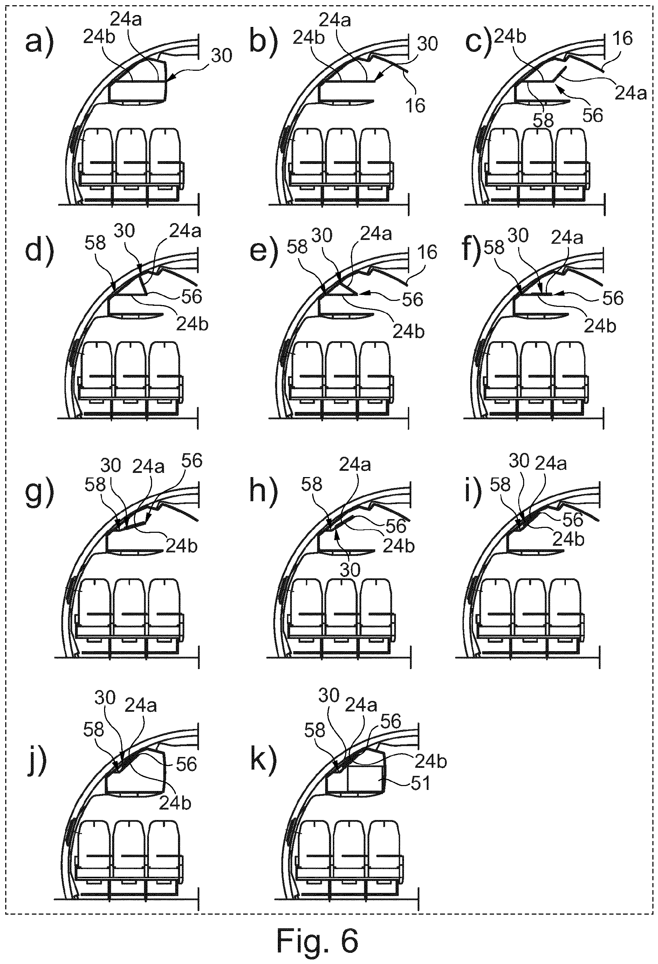

Fig. 6 zeigt in elf Teildarstellungen a) bis k) das Vergrößern des Staufachs 10 zum Einschieben des größeren Gepäckstücks 51, wie in Fig. 2b angedeutet. Der Zwischenboden 24 weist ein erstes Segment 24a auf, an dem die obere Schwenkkante 30 angeordnet ist und das an der Staufachöffnung 14 anliegt. Das erste Segment 24a ist über ein erstes Scharnier 56 schwenkbar an einem zweiten Segment 24b angeordnet. Das erste Segment 24a lässt sich auf das zweite Segment 24b klappen. Das zweite Segment 24b lässt sich indes um ein zweites Scharnier 58 nach oben schwenken. Das zweite Scharnier 58 verläuft parallel zu dem ersten Scharnier 56. Beide Scharniere 56 und 58 verlaufen parallel zu der oberen Schwenkkante 30. Durch das Klappen des ersten Segments 24a auf das zweite Segment 24b und das Hochschwenken des zweiten Segments 24b löst der Zwischenboden 24 vollständig die Aufhebung zwischen den beiden Fächern 20 und 22. Dadurch kann ein größeres Gepäckstück 51 in das Staufach 10 eingeschoben werden, wie in k) gezeigt.

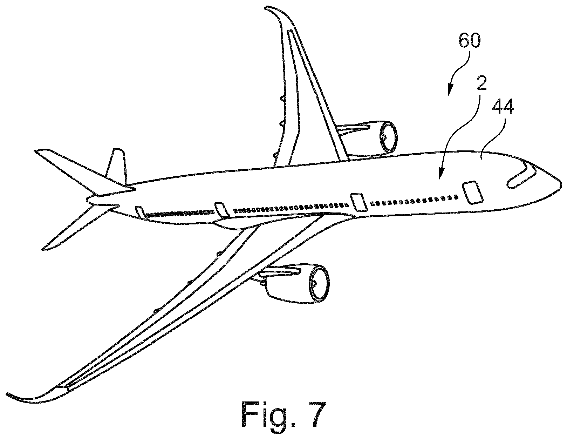

Schließlich zeigt Fig. 7 ein Flugzeug 60, das den Rumpf 44 aufweist, in dem die Kabine 2 angeordnet ist. Diese kann eine Staufachanordnung aus den vorangehenden Figuren aufweisen.

### BEZUGSZEICHEN

- 2: Passagierkabine
- 4: Fußboden
- 6: Passagiersitz
- 8: Staufachanordnung
- 10: Staufach
- 12: Gehäuse
- 14: Staufachöffnung
- 16: Staufachklappe
- 18: obere Öffnungskante
- 20: unteres Fach
- 22: oberes Fach
- 24: Zwischenboden
- 24a: erstes Segment
- 24b: zweites Segment
- 26: untere horizontale Schwenkkante
- 28: Fachboden
- 30: obere horizontale Schwenkkante
- 32: Vorderkante
- 34: Hilfsfläche
- 36: Hilfsebene
- 38: Rückwand
- 40: Passagierserviceeinheit
- 42: Verkleidung
- 44: Flugzeugrumpf
- 46: Mittelgang
- 48: Passagiersitzabschnitt
- 50: Gepäckstück
- 51: Gepäckstück
- 52: Schwerpunkt
- 54: Oberseite des Gepäckstücks
- 56: Scharnier
- 58: Scharnier
- 60: Flugzeug

## Patentansprüche

1. Staufachanordnung (8) für eine Kabine (2) eines Fahrzeugs (60), aufweisend:
mindestens ein Staufach (10) mit einem Gehäuse (12), einer Staufachöffnung (14), einem in dem Gehäuse (12) gebildeten unteren Fach (20) und einem in dem Gehäuse gebildeten oberen Fach (22),
wobei das untere Fach (20) und das obere Fach (22) direkt übereinander angeordnet sind und durch einen zumindest abschnittsweise in das obere Fach (22) verschwenkbaren Zwischenboden (24) voneinander getrennt sind,
wobei an einer unteren Begrenzung des unteren Fachs (20) eine untere horizontale Schwenkkante (26) gebildet ist, auf die Gepäckstücke (50, 51) auflegbar und in das untere Fach (20) einschiebbar sind,
wobei angrenzend an einer unteren Begrenzung des oberen Fachs (22) bei nicht verschwenktem Zwischenboden (24) eine obere horizontale Schwenkkante (30) an dem Zwischenboden (24) gebildet ist, auf die Gepäckstücke (50, 51) auflegbar und in das obere Fach (22) einschiebbar sind, und
wobei das obere Fach (22) eine obere Öffnungskante (18) aufweist, an die sich eine über das oberen Fach (22) erstreckende, zu dem Zwischenboden (24) einen Winkel (α) in einem Bereich von 10° bis 50° aufweisende Hilfsfläche (34) anschließt, die mit zunehmendem Abstand von der oberen Begrenzung (18) einen zunehmenden Abstand zu dem Zwischenboden (24) einschließt,
wobei eine durch die Hilfsfläche (34) aufgespannte Hilfsebene (36) einen Abstand in einem Bereich von 20 bis 45 cm und bevorzugt von 25 bis 35 cm zu der oberen Schwenkkante (30) aufweist, und
wobei das untere Fach (20) und das obere Fach (22) im Bereich der Staufachöffnung (14) horizontal bündig abschließen.

2. Staufachanordnung (8) nach Anspruch 1,
wobei die Staufachöffnung (14) durch eine Staufachklappe (16) verschließbar ist.

3. Staufachanordnung (8) nach Anspruch 1 oder 2,
wobei mindestens die Hälfte und bevorzugt mindestens zwei Drittel der Tiefe des Zwischenbodens (24) verschwenkbar ist.

4. Staufachanordnung (8) nach einem der vorhergehenden Ansprüche,
wobei der Zwischenboden (24) ein erstes schwenkbares Segment (24a) und ein zweites schwenkbares Segment (24b) aufweist, wobei das erste schwenkbare Segment (24a) an dem zweiten schwenkbaren Segment (24b) angeordnet ist und wobei Schwenkachsen beider Segmente (24a, 24b) parallel zueinander sind.

5. Staufachanordnung (8) nach einem der vorhergehenden Ansprüche,
wobei das untere Fach (20) dazu ausgebildet ist, mehrere Handgepäckstücke mit IATA-Standard-Maximalabmessungen nebeneinander aufzunehmen.

6. Staufachanordnung (8) nach einem der vorhergehenden Ansprüche,
wobei das untere Fach (20) einen Fachboden (28) aufweist, der zu dem nicht verschwenkten Zwischenboden (24) einen Abstand von höchstens 35 cm und bevorzugt von höchstens 30 cm aufweist.

7. Staufachanordnung (8) nach einem der vorhergehenden Ansprüche,
ferner aufweisend eine Gasfeder, die schwenkbar mit dem Gehäuse (12) und dem Zwischenboden (24) gekoppelt ist, um den Zwischenboden (24) in einer aufgeschwenkten Position zu halten.

8. Staufachanordnung (8) nach einem der vorhergehenden Ansprüche,
ferner aufweisend mindestens eine Passagier-Service-Einheit (40) oder einen Servicekanal an einer Unterseite des Gehäuses (12).

9. Staufachanordnung (8) nach Anspruch 8,
wobei die Passagier-Service-Einheit (40) oder der Servicekanal stufenlos und kontinuierlich gekrümmt in eine Form des Gehäuses (12) übergeht.

10. Fahrzeug (60) mit einer Kabine (2), einem Fußboden (4), auf dem Fußboden (4) befindlichen Passagiersitzen (6) sowie mindestens einer oberhalb der Passagiersitze (6) angeordneten Staufachanordnung (8) nach einem der Ansprüche 1 bis 9.

11. Fahrzeug (60) nach Anspruch 10,
wobei die untere horizontale Schwenkkante (26) einen vertikalen Abstand in einem Bereich von 150-170 cm von dem Fußboden (4) aufweist.

12. Fahrzeug nach Anspruch 10 oder 11,
wobei die obere horizontale Schwenkkante (30) einen vertikalen Abstand in einem Bereich von 175-195 cm von dem Fußboden (4) aufweist.

13. Fahrzeug (60) nach einem der Ansprüche 10 bis 12,
wobei die Hilfsfläche (34) zu dem Zwischenboden (24) einen Winkel (α) in einem Bereich von 30° bis 35° einschließt.

## Claims

1. Storage compartment arrangement (8) for a cabin (2) of a vehicle (60), having:
at least one storage compartment (10) with a housing (12), a storage compartment opening (14), a lower compartment (20) formed in the housing (12), and an upper compartment (22) formed in the housing,
wherein the lower compartment (20) and the upper compartment (22) are arranged one directly above the other and are separated from each other by an intermediate base (24), which is pivotable at least in sections into the upper compartment (22),
wherein, at a lower delimitation of the lower compartment (20), a lower horizontal pivoting edge (26) is formed, onto which items of luggage (50, 51) can be placed and can be pushed into the lower compartment (20),
wherein, adjacent to a lower delimitation of the upper compartment (22), with the intermediate base (24) not pivoted, an upper horizontal pivoting edge (30) is formed on the intermediate base (24), onto which items of luggage (50, 51) can be placed and can be pushed into the upper compartment (22), and
wherein the upper compartment (22) has an upper opening edge (18) which is adjoined by an auxiliary surface (34) which extends over the upper compartment (22), is at an angle (α) in a range of 10° to 50° with respect to the intermediate base (24) and, as the distance from the upper delimitation (18) increases, encloses an increasing distance from the intermediate base (24),
wherein an auxiliary plane (36) spanned by the auxiliary surface (34) is at a distance in a range of 20 to 45 cm and preferably of 25 to 35 cm from the upper pivoting edge (30), and
wherein the lower compartment (20) and the upper compartment (22) end horizontally flush in the region of the storage compartment opening (14).

2. Storage compartment arrangement (8) according to Claim 1,
wherein the storage compartment opening (14) is closable by a storage compartment flap (16).

3. Storage compartment arrangement (8) according to Claim 1 or 2,
wherein at least half, and preferably at least two thirds, of the depth of the intermediate base (24) is pivotable.

4. Storage compartment arrangement (8) according to one of the preceding claims,
wherein the intermediate base (24) has a first pivotable segment (24a) and a second pivotable segment (24b), wherein the first pivotable segment (24a) is arranged on the second pivotable segment (24b), and wherein pivot axes of the two segments (24a, 24b) are parallel to each other.

5. Storage compartment arrangement (8) according to one of the preceding claims,
wherein the lower compartment (20) is designed to accommodate a plurality of items of hand luggage having IATA standard maximum dimensions next to one another.

6. Storage compartment arrangement (8) according to one of the preceding claims,
wherein the lower compartment (20) has a compartment base (28) which is at a distance of at most 35 cm and preferably of at most 30 cm from the non-pivoted intermediate base (24).

7. Storage compartment arrangement (8) according to one of the preceding claims,
furthermore having a gas spring which is coupled pivotably to the housing (12) and to the intermediate base (24) in order to hold the intermediate base (24) in a pivoted-up position.

8. Storage compartment arrangement (8) according to one of the preceding claims,
furthermore having at least one passenger service unit (40) or a service duct on a lower side of the housing (12) .

9. Storage compartment arrangement (8) according to Claim 8,
wherein the passenger service unit (40) or the service duct merges steplessly and with a continuous curvature into a form of the housing (12).

10. Vehicle (60) having a cabin (2), a floor (4), passenger seats (6) located on the floor (4), and at least one storage compartment arrangement (8) according to one of Claims 1 to 9 arranged above the passenger seats (6).

11. Vehicle (60) according to Claim 10,
wherein the lower horizontal pivoting edge (26) is at a vertical distance in a range of 150-170 cm from the floor (4) .

12. Vehicle according to Claim 10 or 11,
wherein the upper horizontal pivoting edge (30) is at a vertical distance in a range of 175-195 cm from the floor (4) .

13. Vehicle (60) according to one of Claims 10 to 12, wherein the auxiliary surface (34) encloses an angle (α) in a range of 30° to 35° with respect to the intermediate base (24).

## Revendications

1. Agencement de compartiment de rangement (8) pour une cabine (2) d'un véhicule (60), présentant :
au moins un compartiment de rangement (10) avec un boîtier (12), une ouverture de compartiment de rangement (14), un compartiment inférieur (20) formé dans le boîtier (12) et un compartiment supérieur (22) formé dans le boîtier,
le compartiment inférieur (20) et le compartiment supérieur (22) étant agencés directement l'un au-dessus de l'autre et étant séparés l'un de l'autre par un fond intermédiaire (24) pouvant pivoter au moins par sections dans le compartiment supérieur (22),
un bord de pivotement horizontal inférieur (26) étant formé sur une limite inférieure du compartiment inférieur (20), sur lequel des bagages (50, 51) peuvent être posés et insérés dans le compartiment inférieur (20),
un bord de pivotement horizontal supérieur (30) étant formé sur le fond intermédiaire (24) de manière adjacente à une limite inférieure du compartiment supérieur (22) lorsque le fond intermédiaire (24) n'est pas pivoté, sur lequel des bagages (50, 51) peuvent être posés et insérés dans le compartiment supérieur (22), et
le compartiment supérieur (22) présentant un bord d'ouverture supérieur (18) auquel se raccorde une surface auxiliaire (34) s'étendant sur le compartiment supérieur (22), présentant un angle (α) par rapport au fond intermédiaire (24) dans une plage de 10° à 50°, qui présente une distance croissante par rapport au fond intermédiaire (24) au fur et à mesure que la distance par rapport à la limite supérieure (18) augmente,
un plan auxiliaire (36) défini par la surface auxiliaire (34) présentant une distance dans une plage de 20 à 45 cm et de préférence de 25 à 35 cm par rapport au bord pivotant supérieur (30), et
le compartiment inférieur (20) et le compartiment supérieur (22) se terminant horizontalement en affleurement dans la zone de l'ouverture de compartiment de rangement (14).

2. Agencement de compartiment de rangement (8) selon la revendication 1,
l'ouverture du compartiment de rangement (14) pouvant être fermée par un volet de compartiment de rangement (16) .

3. Agencement de compartiment de rangement (8) selon la revendication 1 ou 2,
au moins la moitié et de préférence au moins les deux tiers de la profondeur du fond intermédiaire (24) pouvant pivoter.

4. Agencement de compartiment de rangement (8) selon l'une quelconque des revendications précédentes,
le fond intermédiaire (24) présentant un premier segment pivotant (24a) et un deuxième segment pivotant (24b), le premier segment pivotant (24a) étant agencé sur le deuxième segment pivotant (24b), et les axes de pivotement des deux segments (24a, 24b) sont parallèles entre eux.

5. Agencement de compartiment de rangement (8) selon l'une quelconque des revendications précédentes,
le compartiment inférieur (20) étant configuré pour recevoir plusieurs bagages à main de dimensions maximales standard IATA, côte à côte.

6. Agencement de compartiment de rangement (8) selon l'une quelconque des revendications précédentes,
le compartiment inférieur (20) présentant un fond de compartiment (28) qui présente par rapport au fond intermédiaire (24) non pivoté une distance de 35 cm au plus et de préférence de 30 cm au plus.

7. Agencement de compartiment de rangement (8) selon l'une quelconque des revendications précédentes, présentant en outre un ressort à gaz qui est couplé de manière pivotante au boîtier (12) et au fond intermédiaire (24) pour maintenir le fond intermédiaire (24) dans une position pivotée vers le haut.

8. Agencement de compartiment de rangement (8) selon l'une quelconque des revendications précédentes, présentant en outre au moins une unité de service de passager (40) ou un canal de service sur un côté inférieur du boîtier (12).

9. Agencement de compartiment de rangement (8) selon la revendication 8,
l'unité de service de passager (40) ou le canal de service se courbant de manière continue et progressive pour prendre une forme du boîtier (12).

10. Véhicule (60) avec une cabine (2), un plancher (4), des sièges de passagers (6) se trouvant sur le plancher (4), ainsi qu'au moins un agencement de compartiment de rangement (8) selon l'une quelconque des revendications 1 à 9 agencé au-dessus des sièges de passagers (6).

11. Véhicule (60) selon la revendication 10,
le bord pivotant horizontal inférieur (26) présentant une distance verticale dans une plage de 150 à 170 cm du plancher (4).

12. Véhicule selon la revendication 10 ou 11,
le bord pivotant horizontal supérieur (30) présentant une distance verticale dans une plage de 175 à 195 cm du plancher (4).

13. Véhicule (60) selon l'une quelconque des revendications 10 à 12,
la surface auxiliaire (34) formant un angle (α) avec le fond intermédiaire (24) dans une plage de 30° à 35°.
